# EUROPÄISCHE PATENTSCHRIFT

(11) **EP 1 901 947 B1**
(45) Veröffentlichungstag und Bekanntmachung des Hinweises auf die Patenterteilung: **09.01.2013**
(21) Anmeldenummer: 06762492.4
(22) Anmeldetag: 07.07.2006
(51) Int. Cl.: B60R 25/00, B60Q 1/00, G07C 9/00

(54) **VERFAHREN UND VORRICHTUNG ZUR ANNÄHERUNGSDETEKTION EINER PERSON ODER EINES OBJEKTS**
METHOD AND DEVICE FOR DETECTING AN APPROACHING PERSON OR OBJECT
PROCEDE ET DISPOSITIF DE DETECTION D'APPROCHE D'UNE PERSONNE OU D'UN OBJET

(30) Priorität: 12.07.2005 DE 102005032402
(43) Veröffentlichungstag der Anmeldung: 26.03.2008
(73) Patentinhaber: Mechaless Systems GmbH, 76131 Karlsruhe (DE)
(72) Erfinder: REIME, Gerd, 77815 Bühl (DE); RODEWALD, Andreas, 71083 Herrenberg (DE); SCHOLZ, Rainer, 75378 Bad Liebenzell (DE); ROTTMANN, Frank, 44267 Dortmund (DE)
(74) Vertreter: Durm & Partner
(86) Internationale Anmeldenummer: PCT/EP2006/006685
(87) Internationale Veröffentlichungsnummer: WO 2007/006514

(56) Entgegenhaltungen:
- EP-A- 1 099 812
- WO-A-2004/039631

## Beschreibung

Die Erfindung betrifft ein Verfahren und eine Vorrichtung zur Annäherungsdetektion einer Person oder eines anderen Objekts an ein Objekt, insbesondere an ein Kraftfahrzeug gemäß dem Oberbegriffs der Ansprüche 1 und 14.

Ein derartiges Verfahren ist zum Beispiel aus der EP 1 099 812 A2 bekannt. Dort werden z.B. im Heckbereich eines Fahrzeugs mehrere Zonen definiert und vorzugsweise mit Ultraschall, bedarfsweise aber auch optoelektronisch auf die Annäherung einer Person aus einer entfernten Zone in eine dem Fahrzeug nahe Zone überwacht, um daraus einen Steuerbefehl abzuleiten. Offen bleibt, wie eine optoelektronische Annäherungsdetektion umgesetzt wird.

In der DE 100 64 141 C2 werden um ein Kraftfahrzeug herum verschiedene Zonen gebildet, die durch eine Sende- und Empfangseinheit auf den Zutritt eines Codegebers hin überwacht werden. Gelangt der Codegeber in einen äußeren Bereich, wird zunächst die Berechtigung des Codegebers durch einen Frage-Antwort-Dialog mit der Sende- und Empfangseinheit geprüft. Gegenüber dieser äußeren Zone, die im Wesentlichen der Authentifizierung dient, sind dann je nach Signalpegel oder Laufzeitmessung weitere Zonen um das Fahrzeug herum definiert, die einen jeweiligen Zugangsbereich aktivieren und dem berechtigten Benutzer das Öffnen des Fahrzeugs erlauben. Insbesondere für sonstige Steuerbefehle, wie Komfortsteuerbefehle oder Fernsteuerbefehle zum Aktivieren und Deaktivieren der Alarmanlage ist es notwendig, die Position des Codegebers möglichst genau zu ermitteln, wozu eine Laufzeitmessung oder ein Triangulationsverfahren verwendet wird. Bewegt sich der Benutzer aus den inneren Bereichen wieder nach außen, kann eine Verriegelung des Fahrzeugs erfolgen. Eine Differenzierung zwischen Fahrer- und Beifahrerseite sowie Heckbereich ist möglich, so dass je nach Bewegungsrichtung Fahrer- oder Beifahrerseite oder gar Heckdeckel ver- oder entriegelt werden.

Aus der FR 2 858 347 A1 ist ein Verfahren und eine Vorrichtung bekannt, bei der zur Berechtigungsprüfung des Zugangs zu einem Objekt im Rahmen einer Annäherung durch unterschiedliche, verschiedenen Zonen zugeordnete Übertragungssequenzen bzw. -frequenzen anhand von in diese Zonen fallenden Stützpunkten unter Einsatz von Funksignalen geprüft wird, ob sich eine Person in einer bestimmten Richtung einem Fahrzeug nähert oder davon entfernt. (vgl. auch EP 1 429 300 A1).

Vergleichbare Systeme, die jedoch keine derartige Zonenaufteilung in äußere und innere Zonen um das Fahrzeug herum aufweisen, sind aus DE 198 39 355 C1, DE 198 56 695 A1, DE 197 20 765 A1, DE 199 12 319 C1 und EP 1 172 269 A1 bekannt.

Nach der DE 198 51 177 A1 sind in den Leuchten eines Fahrzeugs optoelektronisch arbeitende Annäherungssensoren installiert, die bei Annäherung einer Person ein Signal zum Start eines Kommunikations-Frage-Antwort-Dialogs mit einem tragbaren Codegeber ohne Richtungsdetektion ermöglichen.

Um es einem berechtigten Benutzer zu ermöglichen, den Zugang zu einem Fahrzeug auch dann zu erhalten, wenn eine Funkfernbedienung nicht betätigt werden kann, da der Benutzer zum Beispiel mehrere Gepäckstücke trägt und keine Hände für die Bedienung frei hat, wird in der DE 100 38 803 A1 vorgeschlagen, bei Vorhandensein eines Codegebers den Zugang durch die Kombination einer Spracheingabe einer sich dem Fahrzeug nähernden Person mit einem zugeordneten Funksignal zu ermöglichen.

Aus der WO 2004/039631 ist ferner eine optoelektronisch arbeitende Vorrichtung bekannt, mit der eine Annäherung eines Objekts reflektiv erfasst werden kann und dann das Licht einer Lichtquelle der Bewegung des Objekts nachgeführt wird.

Ausgehend von diesem Stand der Technik liegt der vorliegenden Erfindung die Aufgabe zugrunde, eine günstige und Energie sparende Möglichkeit für eine Annäherungsdetektion an ein Objekt zu schaffen.

Diese Aufgabe wird durch ein Verfahren mit den Merkmalen des Anspruches 1 sowie durch eine Vorrichtung mit den Merkmalen des Anspruches 14 gelöst.

Im Gegensatz zum Stand der Technik arbeitet das Verfahren optoelektronisch und kann nicht nur irgendeine Annäherung an das Objekt, sondern eine richtungsabhängige Annäherung erfassen. Hierzu erfolgt eine Unterteilung des Annäherungsbereichs in eine vom Fahrzeug entfernte und eine dem Fahrzeug nähere Zone, wobei die sich annähernde Person oder das sich annähernde Objekt zuerst in der entfernten Zone befindet und sich dann in einer vorbestimmten Richtung in die näheren Zone begibt. Wird dieses Bewegungsmuster von der optoelektronischen Messanordnung erkannt, kann gezielt ein Steuerbefehl ausgelöst werden. Die optoelektronische Anordnung umfasst dazu mindestens eine optoelektronischen Messvorrichtung mit wenigstens zwei Lichtsendern (15,16) und wenigstens einem Lichtempfänger, wobei die Lichtsender (15,16) Erfassungskeulen ausstrahlen. Sie kann damit sparsamer betrieben werden als die im Stand der Technik bekannten Verfahren, da zuerst mit einem mit wenig Energie betreibbaren optischen System die Annäherung einer Person oder eines Objekts nach einem bestimmten Muster erkannt wird, bevor weitere Schritte eingeleitet werden.

Vorzugsweise kann damit ein Verfahren oder eine Vorrichtung zur Überprüfung des Zugangs von berechtigten Personen zu einem Objekt verwirklicht werden. Dabei positioniert sich der berechtigte Nutzer zuerst in der entfernten Zone und bewegt sich dann richtungsabhängig, vorzugsweise in unmittelbarer Richtung auf das Fahrzeug oder das sonstige Objekt zu, sodass erst dann in der näheren Zone der Dialog vom Fahrzeug mit dem Codegeber oder dergleichen mit mehr Energieaufwand aufgenommen wird. Da die Abfrage des Codegebers in einem näheren Bereich am Fahrzeug erfolgt, muss auch hierfür weniger Energie aufgewandt werden.

Vorzugsweise sind mehrere optoelektronische Messvorrichtungen vorgesehen, die wenigstens zwei Lichtsender aufweisen, wobei einer der Lichtsender mit seiner Erfassungskeule in die entfernte Zone reicht, während der andere Lichtsender mit seiner Erfassungszone die nähere Zone abdeckt. Die von einer sich nähernden Person rückgestrahlten Lichtsignale werden vom Empfänger empfangen und in einer Auswerteeinheit dahingehend ausgewertet, ob sich ausgehend von einer bestimmten Position, die vorzugsweise mittig vor den optoelektronischen Messvorrichtungen liegt, die Person geradlinig annähert. Bei einem geradlinigen Annähern an das Objekt führt dies dazu, dass die Signale von beiden Messvorrichtungen sich gleichmäßig ändern, was detektiert wird. Bei Verlassen der Erfassungskeule des der entfernten Zone zugeordneten Lichtsenders, was vorzugsweise dem Eintritt in die Erfassungszone der näheren Zone entspricht, ergibt sich zudem ein erfassbarer Nulldurchgang im Signalverlauf des Empfangssignals des Lichtempfängers. Dieser Nulldurchgang ist unabhängig von den Reflektionseigenschaften der Person, sodass eine zuverlässige Zonenabgrenzung möglich ist.

Weitere Vorteile ergeben sich aus den Unteransprüchen.

Im Folgenden wir die Erfindung anhand der beigefügten Figuren näher erläutert. Es zeigen:
- Fig. 1: eine Draufsicht auf eine Person, die sich einem Objekt unter Durchschreiten der Zonen nähert,
- Fig.2, 3: eine Seitenansicht der Annäherung an das Objekt, wobei sich die Person ausgehend von Zone Z1 (Fig.2) dem Objekt in Richtung auf Zone Z2 (Fig. 3) nähert,
- Fig. 4: eine Draufsicht auf das Objekt unter Darstellung der verschiedenen Erfassungskeulen,
- Fig. 5: einen Signalverlauf beim Annähern an das Objekt,
- Fig. 6: eine Darstellung der Verkürzung der Erfassungskeulen infolge eines verringerten Abstandes zu anderen Objekten in Draufsicht,
- Fig. 7,8: eine Annäherung eines anderen Objekts in Seitenansicht und in Draufsicht.

Bevor die Erfindung im Detail beschrieben wird, ist darauf hinzuweisen, dass sie nicht auf die jeweiligen Bauteile der Vorrichtung oder die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn in der Beschreibung und in den Ansprüchen die Einzahl oder unbestimmte Artikel verwendet werden, beziehen sich diese auch auf die Mehrzahl dieser Elemente, solange nicht der Gesamtzusammenhang eindeutig etwas anderes deutlich macht.

Die Erfindung wird im Folgenden an Hand einer in den Figuren dargestellten Vorrichtung zur Annäherungsdetektion erläutert, die als Sicherheitsvorrichtung ausgebildet ist und insbesondere gegen einen unberechtigten Zugang zu einem Objekt oder gegen unbefugte Benutzung eines Objekts schützen soll. Allerdings kann die Vorrichtung und das zugehörige Verfahren auch zur gezielten Annäherungsdetektion zur Auslösung eines beliebeigen Steuerbefehls eingesetzt werden.

Das Objekt 10 ist im Ausführungsbeispiel ein Kraftfahrzeug, Vorrichtung und Verfahren können jedoch ebenso für andere Objekte verwendet werden, wie zum Beispiel Computer, Mobiltelefone, Geldausgabeautomaten, Gebäude oder andere Zugangsobjekte, bei denen eine Berechtigung für die Zugangskontrolle oder die Benutzung nachgewiesen werden muss oder für eine Annäherungsdetektion zur Auslösung eines Steuerbefehls an sich..

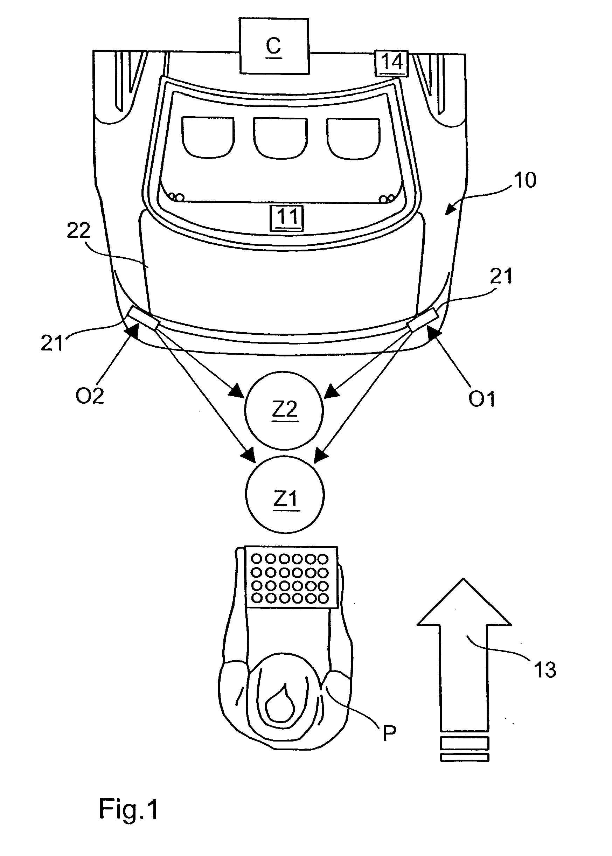

Gemäß Figur 1 ist dem Objekt 10, also im Ausführungsbeispiel dem Kraftfahrzeug, eine objektseitig angeordnete Steuereinrichtung C zugeordnet, die mit einer Sende- und Empfangseinheit 11 versehen ist und die zum Beispiel mit Antennen 14 am Objekt in Verbindung steht, die ihrerseits mit einem tragbaren Codegeber 12 bedarfsweise in Verbindung stehen. Steuereinrichtung C, Sende- und Empfangseinheit und Antenne sind miteinander durch zeichnerisch nicht dargestellte Verbindungen in Kontakt. Gelangt der Codegeber 12 in die Nähe des Objekts 10, erfolgt ein Dialog zur Berechtigungsprüfung, wie aus dem Stand der Technik zum Beispiel aus der DE 100 64 141 C2 oder DE 198 56 695 A1 bekannt. Da derartige Codegeber sowie auch deren Authentifizierung nach verschiedenen Verfahren bekannt ist, wird hierauf nicht näher eingegangen, sondern lediglich auf die genannten Schriften verwiesen.

Führt die Berechtigungsprüfung zu einem positiven Ergebnis der Berechtigung kann ein Steuerbefehl zum Steuern einer Funktion des Objekts 10 erzeugt werden, der im vorliegenden Fall zum Öffnen oder Schließen des Heckdeckels 22 führt, um es der sich nähernden Person zu ermöglichen, ihre Gepäckstücke, im Ausführungsbeispiel ein Getränkekasten, im Kraftfahrzeug abzustellen, ohne ihn zuvor auf dem Boden vor dem Fahrzeug abstellen zu müssen.

Der Bereich in der Nähe des Objekts 10 ist in wenigstens zwei Zonen Z1, Z2 aufgeteilt, wobei in einer vom Objekt 10 entfernten Zone Z1 die Annäherung der Person erkannt wird und in einer demgegenüber dem Objekt näheren Zone Z2 der Steuerbefehl erzeugt wird. Die Zonen Z1,Z2 werden dahingehend optoelektronisch überwacht, ob sich eine Person P ausgehend von einer vorbestimmten Position außerhalb der näheren Zone Z2 in einer vorbestimmten Richtung 13, vorzugsweise unmittelbar in Richtung auf das Objekt 10 in die nähere Zone Z2 begibt. Die Sende- und Empfangseinheit 11 führt die Berechtigungsprüfung mit dem Codegeber 12 vorzugsweise unter Wirksamschalten der wenigstens einen Antenne 14 erst dann durch, wenn sich die Person P in der vorbestimmten Richtung 13 in die innere Zone Z2 begibt, dass heißt die Authentifizierung kann vorzugsweise erst jetzt im Nahbereich des Objekts erfolgen, sodass ein geringerer Energieaufwand für den Frage-Antwort-Dialog zwischen Codegeber und Antenne erforderlich ist.

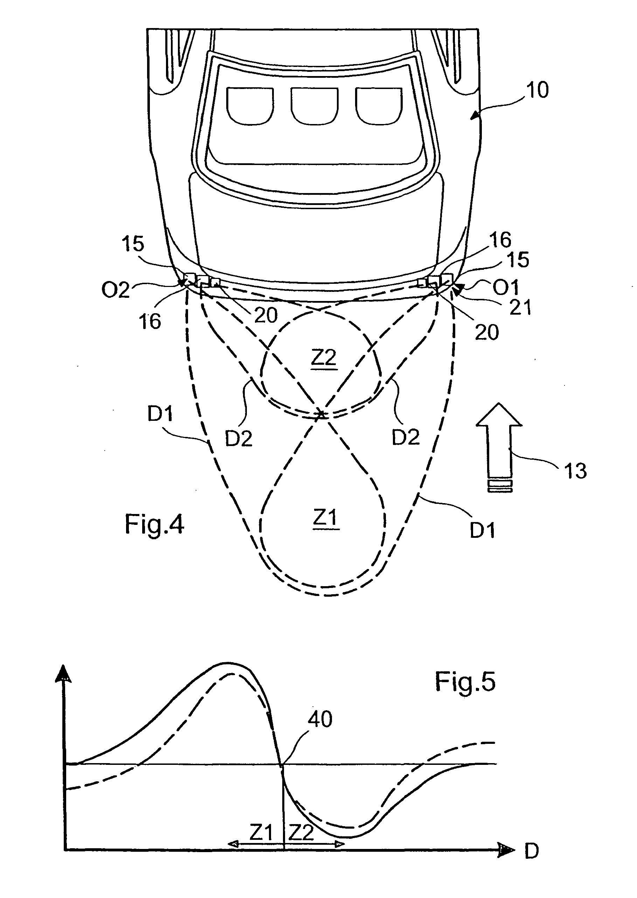

Die vom Fahrzeug entfernte Zone hingegen wird über die wenigstens eine optoelektronische Messvorrichtung O1, 02 überwacht. Die vorzugsweise zwei Messvorrichtungen 01,02, die vorzugsweise jeweils wenigstens zwei Lichtsender 15,16 und je einen Lichtempfänger 20 gemäß Fig. 5 aufweisen, arbeiten vorteilhafterweise zur Erzielung der gewünschten hohen Empfindlichkeit nach dem aus der EP 706 648 B1 bekannten HALIOS^{®}-Prinzip. Dadurch ist es möglich ohne Fremdlicht- , Temperatur- oder Alterungseinflüsse zwischen Lichtsender 15, 16 und Lichtempfänger 20 Lichtstrecken auszubilden, insbesondere wenn Licht von einem rückstrahlenden Körper wie einer sich nähernden Person rückgestrahlt wird. Die Lichtsender 15,16 werden über einen Taktgenerator zeitabschnittsweise und wechselweise betrieben. Das in der Amplitude wenigstens einer Lichtstrecke geregelte Licht wirkt gegebenenfalls mit dem Licht eines weiteren Lichtsenders wie zum Beispiel einer Kompensationslichtquelle so auf den Lichtempfänger 20 ein, dass ein Empfangssignal ohne taktsynchrone Signalanteile entsteht. Das Empfangssignal des Lichtempfängers 20 wird einem Synchrondemodulator zugeführt, der das Empfangssignal wiederum in die den beiden Lichtquellen entsprechenden Signalkomponenten zerlegt. Da diese Signale den durch die Anordnung der Lichtsender 15,16 definierten Erfassungskeulen D1, D2 dieser Lichtsender 15, 16 entsprechen, kann dadurch eine exakte Positionsbestimmung als auch eine Bestimmung der Bewegungsrichtung der sich nähernden Person erfolgen. Dabei genügt beispielsweise ein Abstrahlwinkel der Lichtsender 15,16 von 10°. Andere Winkel sind jedoch möglich.

Die aus dem Empfangssignal generierten beiden Signalkomponenten werden nach Tiefpassfilterung in einem Vergleicher miteinander verglichen. Treten Signalunterschiede auf, werden diese mittels Leistungsregelung des in die Lichtstrecke eingestrahlten Lichts zu einem Wechselsignal am Lichtempfänger mit dem Wert Null ausgeregelt. Liegt ein Signal infolge einer ungleichmäßigen Reflexion in den Empfängern aus den verschiedenen Lichtstrecken an, ergibt sich eine Änderung der Regelspannung, mit der die in die Lichtstrecke eingestrahlte Strahlungsmenge geregelt wird, sodass sich in Abhängigkeit einer Zeitkonstante eine Rückregelung des Wechselsignals an der Fotodiode zu Null ergibt.

Ein weiterer Vorteil dieses Aufbaus ist, dass die Lichtsender 15, 16 auch für Licht unempfindlich sind, das zum Beispiel von den Heckleuchten 21 stammt. Insofern können die Lichtsender in die Heckleuchten 21 integriert werden. Bedarfsweise ist auch eine Abschottung gegenüber den anderen Lichtquellen möglich. Erfolgt die Taktung des Lichtsignals mit einer vom menschlichen Auge nicht wahrnehmbaren Frequenz, können auch die Lichtquellen der Heckleuchte selbst als Lichtsender verwendet werden. Die Integration in die Heckleuchten 21 hat den Vorteil, dass keine gesonderten Bauelemente aufwändig am Objekt vorgesehen werden müssen. Gleichzeitig wird das Licht der Lichtsender diffus gestreut. Lichtsender und Lichtempfänger können auch an andere Stelle am Objekt, bei einem Kraftfahrzeug z.B. im Dachbereich angeordnet werden. Es ist auch möglich Lichtsender 15, 16 auf einer Seite und den entsprechenden Empfänger auf der anderen Seite des Objekts bei ggf. nur einer Messvorrichtung vorzusehen

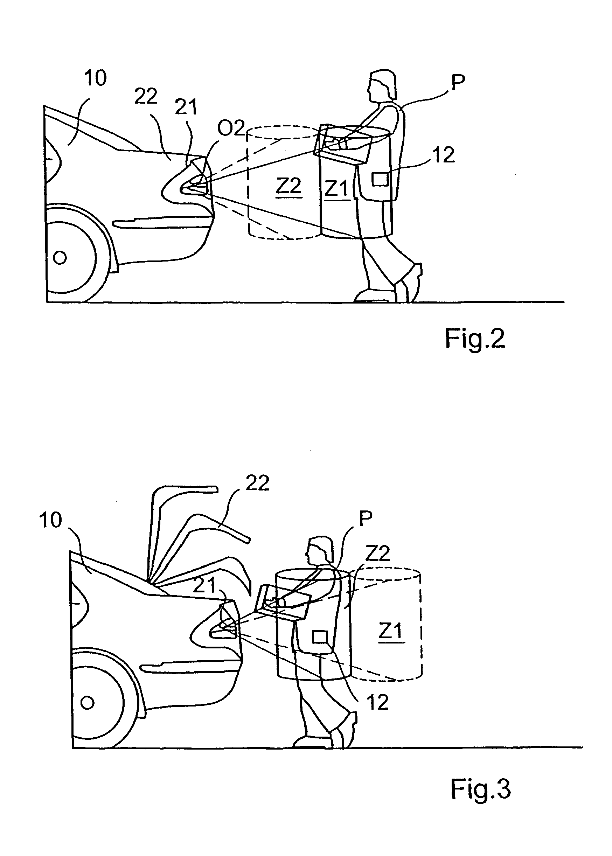

Anhand der Figuren 2 bis 4 lässt sich das Verfahren erläutern. Das Objekt 10 überwacht zyklisch durch einen optischen Sensor, nämlich die wenigstens eine Messvorrichtung 01, O2 einen definierten Bereich, der durch die vom Fahrzeug entfernte Zone Z1 gebildet wird. Der Benutzer bewegt sich geradlinig im Ausführungsbeispiel auf die Mitte des Fahrzeughecks zu. Als vorbestimmte Position wird dort in Zone Z1 die mittige Position definiert, sodass eine Auswerteeinheit der Steuereinrichtung C prüfen kann, ob von den beiden Messvorrichtungen gleich große Signale am Lichtempfänger 20 eingehen. Nach Erreichen der vom Objekt entfernten Zone Z1 leuchtet jeweils eine Lichtquelle oder einer der Lichtsender 15,16, die vorzugsweise in der Heckleuchte 21 angeordnet sind, als Quittierung auf. Steht der Benutzer nicht mittig hinter dem Fahrzeug, leuchtet dementsprechend nur jeweils die linke oder rechte LED auf, um die falsche Stellung anzuzeigen. Leuchten beide LEDs auf, kann der Benutzer einen Schritt vorwärts in die dem Fahrzeug nähere Zone Z2 machen.

Auch dies wird durch die Sensorik erkannt. Daraufhin tritt die Sende- und Empfangseinheit 11 mit dem tragbaren Codegeber 12 in Kontakt. Dieser Codegeber kann eine Codekarte, wie sie zum Beispiel bei Keyless-Go-Fahrzeugen vorhanden ist, der Fahrzeugschlüssel oder dergleichen sein. Grundsätzlich ist jede Art von Codegeber möglich. Der Codegeber 12 sendet ein verschlüsseltes Antwort-Signal zurück, wodurch der berechtigte Benutzer authentifiziert ist. Durch diesen Vorgang begründet der Benutzer seinen Wunsch, einen Steuerbefehl am Fahrzeug auszuführen, der im Ausführungsbeispiel der Öffnungswunsch zum Öffnen des Heckdeckels 22 ist. Vorzugsweise nach einer vorgegebenen Verharrzeit, springt der vorgespannte Heckdeckel selbstständig aus dem Schloss oder wird aktorisch geöffnet. Beim aktorisch angetriebenen Heckdeckel 22 ist auch eine aktorische Schließfunktion beim Verlassen der näheren Zone Z2 durch den berechtigten Benutzer möglich. Diese Vorgehensweise ermöglicht dem Benutzer ein berührungsloses Öffnen bzw. Schließen des Heckdeckels 22. Gemäß Fig. 4 werden durch die mehreren Lichtsender 15,16 und wenigstens einen Lichtempfänger 20 mehrere Erfassungskeulen D1, D2 gebildet, die sich so überlappen, dass die Zonen Z1 und Z2 entstehen. Durch die vorzugsweise am Objekt vorhandenen, zwei voneinander beabstandeten optoelektronischen Messvorrichtungen 01,02 lassen sich die Erfassungskeulen so anordnen, dass jeweils der eine Lichtsender 15 mit seiner Erfassungskeule D1 in die entfernte Zone Z1 reicht, während der andere Lichtsender 16 mit seiner Erfassungskeule D2 die nähere Zone Z2 abdeckt. Befindet sich eine Person mittig in Zone Z1, ergeben sich ungefähr gleichgroße Lichtsignale von beiden Messvorrichtungen am Lichtempfänger 20, was durch das Aufleuchten der beiden Heckleuchten 21 quittiert werden kann. Um dies festzustellen, werden die in Folge der Rückstrahlung am Lichtempfänger 20 eingehenden Signale wenigstens zweier Erfassungskeulen D1 einerseits und D2 andererseits jeweils getrennt erfasst und innerhalb der jeweiligen Zone miteinander nach dem Prinzip der optischen Waage verglichen. Bewegt sich die Person geradlinig auf das Objekt zu, das heißt etwa mittig zu den beiden Messvorrichtungen, ergeben sich nahezu identische Signale, sodass die Bewegungsrichtung festgestellt werden kann. Gleichzeitig verlässt die Person die Erfassungskeulen der Lichtsender 15 und gelangt in die Erfassungskeulen der Lichtsender 16, die die nähere Zone Z2 bilden. Bei diesem Bewegungsvorgang ergibt sich ein eindeutiger Nulldurchgang 40 des Signals gemäß Fig. 5, der unabhängig ist von der Reflexion der jeweiligen Person, sodass die Zonen deutlich voneinander abgegrenzt sind. Verallgemeinert ergibt sich bei Annäherung einer Person P an das Objekt 10 regelmäßig ein Anstieg des Signallevels in Zone Z1 und anschließend ein Anstieg des Signallevels in Zone Z2 bei gleichzeitiger Abnahme des Signallevels in Zone Z1. Grundsätzlich können auch ausgehend von der Mitte oder einer anderen Stelle des Objekts 10 Erfassungskeulen von der Mitte nach außen angeordnet werden. Dann mag sich zwar ein anderes Bewegungsmuster und eine andere Bewegungsrichtung ergeben, die Funktionsweise ist jedoch analog zu der bisher beschriebenen.

Eie Querbewegung in den Zonen Z1, Z2 führt grundsätzlich nicht zu einem derartigen Nulldurchgang, sodass bereits dadurch der Benutzer von Passanten unterscheidbar gemacht wird. In der näheren Zone Z2 kann zudem die Authentifizierung über den Codegeber 12 erfolgen.

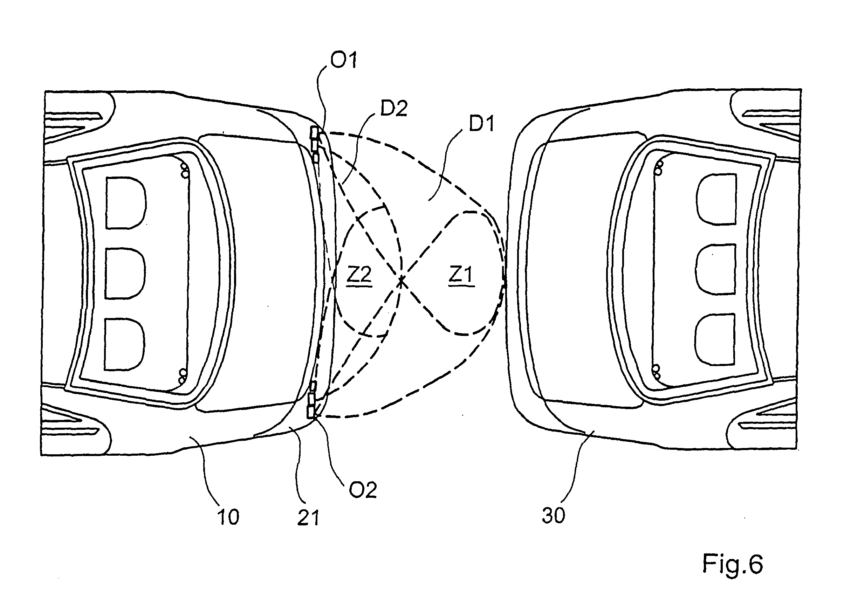

Fig. 6 zeigt den Fall, dass aufgrund eines Einparkens des Fahrzeugs oder aus anderen Gründen der Abstand des Objekts 10 zu anderen Objekten 30 verringert ist. In diesem Fall besteht die Möglichkeit die Erfassungskeulen D1,D2 so zu beeinflussen, dass die Zonen Z1,Z2 zwar noch vorhanden sind, jedoch beide näher am Objekt 10 liegen. Die Messvorrichtungen 01, 02 erkennen, wenn sich über einen längeren Zeitraum hinweg ein Objekt 30 in ihrem Erfassungsbereich befindet, sodass eine selbsttätige Nachstellung der Zonen entweder durch Änderung der Intensität oder der Abstrahlrichtung der Lichtsender möglich wird. Wird der Abstand für den Aufbau von zwei getrennten Zonen zu gering, wird dies ignoriert oder es werden keine Zonen gebildet, da der Benutzer dann ohnehin seitlich in den Bereich hinter dem Fahrzeug eintritt.

Die entfernte Zone Z1 wird bereits, bevor eine Person die vorbestimmte Position einnimmt, auf die Annäherung einer Person P an sich dadurch überwacht, dass intermittierend mehrerer Lichtsender 15,16 gemeinsam Licht abstrahlen und dass bei einer entsprechenden Rückstrahlung eines Körpers in den Lichtempfänger die Erfassungskeulen D1, D2 wirksam geschalten werden. Durch diese Überwachung als auch durch das Aktivschalten der Antenne 14 erst bei Annäherung nach dem vorgegebenen Bewegungsmuster in die Zone Z2, kann der Energiebedarf für die Sicherheitsvorrichtung gegenüber vorbekannten Systemen verringert werden.

Die Vorrichtung selbst umfasst außer der Steuereinrichtung C, der Sende- und Empfangseinheit 11 und dem tragbaren Codegeber 12 Mittel zur Erzeugung eines Steuerbefehls zum Steuern einer Funktion des Objekts 10 bei positivem Ergebnis der Berechtigungsprüfung. Ferner sind die Mittel zur zonenweisen Überwachung des Objekts unter Aufteilung in die entfernte Zone Z1 und die nähere Zone Z2 vorgesehen. Die Mittel zur zonenweisen Überwachung umfassen die wenigstens eine optoelektronische Messvorrichtung O1, 02 mit wenigstens zwei Lichtsendern 15,16 und wenigstens einem Lichtempfänger 20, wobei den Lichtsendern die Erfassungskeulen D1, D2 zugeordnet sind. Ferner ist eine Auswerteeinheit vorgesehen, die einerseits Position und Bewegungsrichtung der sich nähernden Person überwacht und andererseits Mittel zur Bestimmung des vorzugsweise gleichzeitigen Nulldurchgangs 40 der am Lichtempfänger 20 eingehenden Signale auch bei Annäherung einer Person P an das Objekt 10 in der vorbestimmten Richtung aufweist.

Die Vorrichtung und die Ausbildung der Zonen kann ergänzend auch dazu genutzt werden, die Helligkeit der Bremsleuchten zu beeinflussen. Bei und auch nach Anhaltevorgängen vor Kreuzungen, Einmündungen, Staus etc., oder während eines "Stop and Go-Betriebs", bleibt der Fahrer, unabhängig von der Getriebeart, mit dem Fuß auf dem Bremspedal stehen, was zu einem Aufleuchten der Bremsleuchten führt. Durch die hohe Leuchtstärke der Bremsleuchte wird das Warten hinter einem stehenden Fahrzeug, für die nachfolgenden Verkehrsteilnehmer, als unangenehm empfunden.

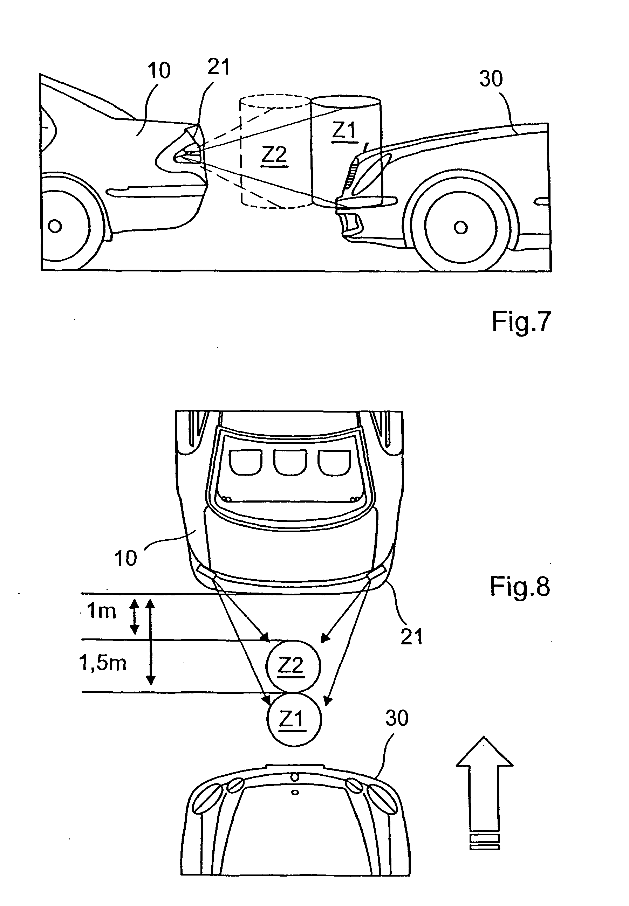

Bei stehendem Fahrzeug wird ZoneZ1 durch einen optischen Sensor zyklisch überwacht. Bewegt sich nun z.B. geradlinig ein nachfolgendes Objekt 30, also insbesondere ein Fahrzeug gemäß Fig. 7, 8 auf das Fahrzeugsheck des Vordermanns zu, wird, wenn das Fahrzeug die Zone Z1 erreicht, die Bremsleuchte oder eine andere der in den Heckleuchten 21 aufgenommenen Beleuchtungsmittel in ihrer Leuchtstärke auf eine für das menschliche Auge angenehmere Leuchtstärke geregelt, vorzugsweise herabgeregelt oder in Abhängigkeit des Abstands kontinuierlich bedarfsweise bis zu einem Minimalwert herabgedimmt. Entfernt sich das andere Objekt wieder, kann die Leuchtstärke wieder erhöht werden. Beträgt bei Annäherung des nachfolgenden Objekts 30 die Leuchtstärke z.B. 80% ihrer maximalen Leuchtstärke, kann die Leuchtstärke je nach Abstand almmählich auf 20 bis 80%, vorzugsweise auf z. B. 50% des Ausgangswerts geregelt werden. Geeignete Erfahrungswerte können in der Steuerung hinterlegt werden, meist wird jedoch ein Betrag von wenigstens 20% der Leuchtstärke abhängig von weiteren Randbedingungen wie Helligkeit oder Wetter- und Umweltbedingungen nicht unterschritten werden.

Ist die optoelektronische Messeinrichtung 01,02 in den Heckleuchten 21 des Fahrzeugs angeordnet, kann diese zusätzlich auch dazu benutzt werden, mit ihren Sendern und Empfängern zumindest in gewissen zeitlichen Abständen die Umgebung und/oder Oberfläche der Heckleuchten auf Veränderungen zu überwachen, um z.B. den Verschmutzungsgrad zu bestimmen. In Abhängigkeit des Verschmutzungsgrads kann die Leuchtstärke der Heckleuchte bzw. der darin aufgenommenen Leuchten für Schlusslicht, Bremslicht, Blinker oder dergleichen auf- oder abgedimmt bzw. -geregelt werden.

### Bezugszeichenliste

- 10: Objekt
- 11: Sende- und Empfangseinheit
- 12: Codegeber
- 13: Richtung
- 14: Antenne
- 15,16: Lichtsender
- 20: Lichtempfänger
- 21: Heckleuchte
- 22: Heckdeckel
- 30: anderes Objekt

- C: Steuereinrichtung
- D1,D2: Erfassungskeule
- 01, 02: optoelektronische Messvorrichtung
- P: Person
- Z1: entfernte Zone
- Z2: nähere Zone

## Patentansprüche

1. Verfahren zur Detektion einer Annäherung einer Person (P) oder eines anderen Objekts (30) an ein Objekt (10), insbesondere an ein Kraftfahrzeug, mit
- einer objektseitig in dem angehährten Objekt angeordneten Steuereinrichtung (C), die mit einer Sende- und Empfangseinheit (11) versehen ist, zur Erzeugung eines Steuerbefehls zum Steuern einer Funktion des angehähnten Objekts (10) bei Annäherung,
- wobei der Bereich in der Nähe des angehähnten Objekts (10) in wenigstens zwei Zonen (Z1, Z2) aufgeteilt wird, wobei in einer vom angehähnten Objekt (10) entfernten Zone (Z1) die Annäherung erkannt wird und in einer demgegenüber dem angehähnten Objekt näheren Zone (Z2) der Steuerbefehl erzeugt wird,
- wobei die Zonen (Z1,Z2) optoelektronisch dahingehend überwacht werden, ob sich eine Person (P) oder ein anderes Objekt (30) ausgehend von einer Position in der entfernten Zone (Z1) in einer vorbestimmten Richtung (13) in die nähere Zone (Z2) begibt,
**dadurch gekennzeichnet, dass** die Zonen mittels mindestens einer optoelektronischen Messvorrichtung (01,02) mit wenigstens zwei Lichtsendern (15,16) und wenigstens einem Lichtempfänger (20) überwacht werden, wobei die Lichtsender (15,16) Erfassungskeulen ausstrahlen.

2. Verfahren nach Anspruch 1, **dadurch gekennzeichnet, dass** die Annäherungsdetektion zum Nachweis einer Berechtigung einer Person (P) zum berührungslosen Ver- oder Entriegeln oder zur Benutzung des Objekts (10) durchgeführt wird, mit
- einem tragbaren Codegeber (12), der mit der Sende- und Empfangseinheit (11) einen Dialog zur Berechtigungsprüfung bei Annäherung des Codegebers an das Objekt (10) positionsabhängig durchführt,
- wobei bei positivem Ergebnis der Berechtigungsprüfung der Steuerbefehl zum Steuern der Funktion des Objekts (10) erzeugt wird,
- wobei weiter vorzugsweise die Sende- und Empfangseinheit (11) die Berechtigungsprüfung mit dem Codegeber (12) vorzugsweise unter Wirksamschalten wenigstens einer Antenne (14) durchführt, wenn sich die Person (P) oder das andere Objekt (30) in der vorbestimmten Richtung (13) in die innere Zone (Z2) begibt.

3. Verfahren nach Anspruch 1 oder 2, **dadurch gekennzeichnet, dass** das Objekt (10) ein Signal gibt, wenn die Person (P) oder das andere Objekt (30) in der vorbestimmten Position ist.

4. Verfahren nach einem der vorhergehenden Ansprüche, **dadurch gekennzeichnet, dass** mehrere Erfassungskeulen (D1, D2) für eine Erfassung der Person (P) oder des anderen Objekts (30) als rückstrahlender Körper gebildet werden, die den jeweiligen Zonen (Z1, Z2) zugeordnet sind.

5. Verfahren nach Anspruch 4, **dadurch gekennzeichnet, dass** die am Lichtempfänger (20) infolge der Rückstrahlung eingehenden Lichtsignale der wenigstens zwei Erfassungskeulen (D1,D2) je Zone (Z1, Z2) getrennt erfasst und innerhalb der Zone miteinander verglichen werden, wobei vorzugsweise am Objekt (10) wenigstens zwei voneinander beabstandete optoelektronische Messvorrichtungen (01,02) mit je wenigstens zwei Lichtsendern (15,16) und vorzugsweise je einem Lichtempfänger (20) vorgesehen sind, wobei jeweils der eine Lichtsender (15) mit seiner Erfassungskeule (D1) in die entfernte Zone (Z1) reicht, während der andere Lichtsender (16) mit seiner Erfassungskeule (D2) die nähere Zone (Z2) abdeckt.

6. Verfahren nach Anspruch 4 oder 5, **dadurch gekennzeichnet, dass** die Position in der entfernten Zone (Z1) dadurch vorbestimmt ist, dass bei Positionierung der Person (P) oder des anderen Objekts (30) mittig zwischen den optoelektronischen Messvorrichtungen (01,02) in der entfernten Zone (Z1) ungefähr gleich große Lichtsignale von beiden Messvorrichtungen am Lichtempfänger (20) vorliegen.

7. Verfahren nach einem der vorhergehenden Ansprüche, **dadurch gekennzeichnet, dass** zur Feststellung, ob sich die Person (P) oder das andere Objekt (30) in der vorbestimmten Richtung (13) dem Objekt (10) nähert, geprüft wird, ob der Signalverlauf des am Lichtempfänger (20) eingehenden Signals bzw. der aus den beiden optoelektronischen Messvorrichtungen (01,02) stammenden Signale einen Nulldurchgang hat bzw. haben.

8. Verfahren nach einem der vorhergehenden Ansprüche, **dadurch gekennzeichnet, dass** die Ausdehnung der näheren Zone (Z2) und der entfernten Zone (Z1) bei geringem Abstand des Objekts (10) zu anderen Objekten (30) verkürzt wird.

9. Verfahren nach einem der vorhergehenden Ansprüche, **gekennzeichnet durch** das Anordnen von je zwei Lichtsendern (15,16) und je eines Lichtempfängers (20) in den Heckleuchten (21) eines Kraftfahrzeugs, wobei Lichtsender und Lichtempfänger vorzugsweise dafür vorgesehen sind, insbesondere während der Fahrt den Verschmutzungsgrad der Heckleuchten zu bestimmen, und wobei in Abhängigkeit des Verschmutzungsgrads die Leuchtstärke der Heckleuchte bzw. der darin aufgenommenen Leuchten für Schlusslicht, Bremslicht, Blinker oder dergleichen geregelt wird.

10. Verfahren nach einem der vorhergehenden Ansprüche, **dadurch gekennzeichnet, dass** der Steuerbefehl zum Öffnen oder Verriegeln des Heckdeckels (22) eines Kraftfahrzeugs dient.

11. Verfahren nach einem der Ansprüche 4 bis 10, **dadurch gekennzeichnet, dass**, bevor eine Person (P) oder ein anderes Objekt (30) die vorbestimmte Position in der entfernten Zone (Z1) einnimmt, diese Zone auf die Annäherung einer Person (P) oder eines anderen Objekts (30) an sich dadurch überwacht wird, dass intermittierend mehrere Lichtsender (15,16) gemeinsam Licht abstrahlen und dass bei einer entsprechenden Rückstrahlung eines Körpers in den Lichtempfänger (20) die Erfassungskeulen (D1,D2) wirksam geschaltet werden.

12. Verfahren nach einem der vorhergehenden Ansprüche, **dadurch gekennzeichnet, dass** überwacht wird, ob die Person (P) oder das andere Objekt (30) die nähere Zone (Z2) verlässt und darauf hin ein weiterer Steuerbefehl erzeugt wird.

13. Verfahren nach einem der vorhergehenden Ansprüche, **dadurch gekennzeichnet, dass** bei Betrieb des Fahrzeugs die Zone (Z1, Z2) dahingehend überwacht wird, ob sich ein nachfolgendes anderes Objekt (30), insbesondere ein Fahrzeug annähert, und dass, sobald das andere Objekt die Zone (Z1) erreicht, die Bremsleuchte in ihrer Leuchtstärke geregelt, vorzugsweise herabgeregelt wird, wobei die Zone vorzugsweise dahingehend überwacht wird, ob sich das andere Objekt geradlinig nähert und/oder wobei vorzugsweise die Leuchtstärke in Abhängigkeit des Abstands kontinuierlich bis zu einem Minimalwert herabgedimmt wird bzw. bei Vergrößerung des Abstands aufgedimmt wird.

14. Vorrichtung zur Annäherungsdetektion einer Person (P) oder eines anderen Objekts an ein Objekt (10), insbesondere an ein Kraftfahrzeug, mit
- einer objektseitig in dem angenähnten Objekt angeordneten Steuereinrichtung (C), die mit einer Sende- und Empfangseinheit (11) verbunden ist,
- Mitteln zur Erzeugung eines Steuerbefehls zum Steuern einer Funktion des angenährten Objekts (10) bei Annäherung,
- Mitteln zur zonenweisen Überwachung der Nähe des angenährten Objekts mittels wenigstens einer optoelektronischen Messvorrichtung (01,02), wobei wenigstens zwei Zonen vorgesehen sind, von denen eine vom angenährten Objekt (10) entfernte Zone (Z1) zur Erkennung der Annäherung und eine nähere Zone (Z2) vorgesehen sind, in der der Steuerbefehl erzeugt wird,
- einer Auswerteeinheit zur Bestimmung, ob sich eine Person (P) oder ein anderes Objekt (30) ausgehend von einer Position in der entfernten Zone (Z2) in einer vorbestimmten Richtung (13) in die nähere Zone (Z2) begibt.
**dadurch gekennzeichnet, dass** die optoelektronische Messvorrichtung (01,02) wenigstens zwei Lichtsendern (15,16) und wenigstens einen Lichtempfänger (20) umfasst, wobei den Lichtsendern (15,16) Erfassungskeulen zugeordnet sind, die die vom angenährten Objekt (10) entfernte Zone (Z1) und die nähere Zone (Z2) definieren.

15. Vorrichtung nach Anspruch 14, **dadurch gekennzeichnet, dass** die Vorrichtung eine Sicherheitsvorrichtung gegen unberechtigten Zugang zu einem Objekt oder gegen unbefugte Benutzung des Objekts (10), insbesondere des Kraftfahrzeugs ist, mit
- einem tragbaren Codegeber (12) zum Aufbau eines Dialogs mit der Sende- und Empfangseinheit (11) zur Berechtigungsprüfung bei Annäherung des Codegebers an das Objekt (10), und
- Mitteln zur Erzeugung des Steuerbefehls zum Steuern der Funktion des Objekts (10) bei positivem Ergebnis der Berechtigungsprüfung,

16. Vorrichtung nach Anspruch 14 oder 15, **dadurch gekennzeichnet, dass** zwei optoelektronische Messvorrichtungen (01,02) vorgesehen sind, deren durch die Lichtsender (15,16) gebildeten, den Zonen (Z1, Z2) zugeordneten Erfassungskeulen (D1, D2) sich überlappen, wobei vorzugsweise die am Objekt vorgesehene Messvorrichtung (01,02) wenigstens zwei Lichtsender (15,16) und vorzugsweise einen Lichtempfänger (20) umfasst, wobei vorzugsweise jeweils der eine Lichtsender (15) mit seiner Erfassungskeule (D1) in die äußere Zone (Z1) reicht, während der andere Lichtsender (16) mit seiner Erfassungskeule (D2) die innere Zone (Z2) abdeckt.

17. Vorrichtung nach einem der Ansprüche 14 bis 16, **dadurch gekennzeichnet, dass** Mittel zur Bestimmung eines vorzugsweise gleichzeitigen Nulldurchgangs der am Lichtempfänger (20) eingehenden Signale aus beiden optoelektronischen Messvorrichtungen (01,02) bei Annäherung einer Person (P) oder eines anderen Objekts (30) an das Objekt (10) in der vorbestimmten Richtung (13) vorgesehen sind.

18. Vorrichtung nach einem der Ansprüche 14 bis 17, **dadurch gekennzeichnet, dass** Lichtsender (15,16) und Lichtempfänger (20) jeweils in den Heckleuchten (21) eines Kraftfahrzeugs angeordnet sind, wobei vorzugsweise Mittel zur Regelung der Leuchtstärke der, Bremsleuchte, vorgesehen sind, wenn sich ein nachfolgendes anderes Objekt (30), insbesondere ein Fahrzeug der Zone nähert (Z1, Z2).

19. Vorrichtung nach einem der vorhergehenden Ansprüche 14 bis 18, **dadurch gekennzeichnet, dass** die Funktion das Öffnen oder Schließen eines Heckdeckels (22) ist.

## Claims

1. A method of detecting the approach of a person (P) or another object (30) to an object (10), particularly to a motor vehicle, including:
- a control device (C), which is arranged in the approached object and is provided with a transmitting and receiving unit (11), for producing a control command for controlling a function of the approached object (10) when the approach occurs,
- wherein the region in the vicinity of the approached object (10) is divided into at least two zones (Z1, Z2), wherein the approach is identified in one zone (Z1) remote from the approached object (10) and the control command is produced in a zone (Z2) which, by contrast, is closer to the approached object,
- wherein the zones (Z1, Z2), are opto-electronically monitored as to whether a person (P) or another object (30) moves, starting from a position in the remote zone (Z1), in a predetermined direction (13) into the other zone (Z2),
- **characterised in that** the zones are monitored by means at least one opto-electronic measuring device (O1, 02) with at least two light emitters (15, 16) and at least one light receiver (20), wherein the light emitters (15, 16) emit detection lobes.

2. A method as claimed in claim 1, **characterised in that** the approach detection is performed for verification of the authorisation of a person (P) for contactlessly locking or unlocking or for using the object (10), including:
- a portable codetransmitter, which conducts a dialogue in a positionally dependant manner with the transmitting and receiving unit (11) for authorisation checking purposes on approach of the codetransmitter to the object (10),
- wherein, if there is a positive result of the authorisation check, the control command for controlling the function of the object (10) is produced,
- wherein further the transmitting and receiving unit (11) preferably conducts the authorisation check with the codetransmitter (12), preferably whilst rendering in at least one antenna (14) operative, when the person (P) or the object (30) moves in the predetermined direction (13) into the inner zone (Z2).

3. A method as claimed in claim 1 or 2, **characterised in that** the object (10) gives a signal when the person (P) or the other object (30) is in the predetermined position.

4. A method as claimed in one of the preceding claims, **characterised in that** a plurality of detection lobes (D1, D2) for the detection of the person (P) or the other object (30) are formed as reflective bodies, which are associated with the respective zones (|Z1, Z2).

5. A method as claimed in claim 4, **characterised in that** the light signals, which enter the light receiver (20) as a result of the reflection from the at least two detection lobes (D1, D2) per zone (Z1, Z2) are detected separately and are compared with one another within the zone, wherein preferably at least two opto-electronic measuring devices (01, 02) spaced from one another with at least two light emitters (15, 16) each and preferably a respective light receiver (20) are provided on the object (10), wherein in each case the one light emitter reaches with its detection lobe (D1) into the remote zone (Z1) whilst the other light emitter (16) covers the nearer zone (Z2) with its detection lobe (D2).

6. A method as claimed in claim 4 or 5, **characterised in that** the position in the remote zone (Z1) is predetermined by the fact that when positioning the person (P) or the other object (30) centrally between the opto-electronic measuring devices (01, 02) in the remote zone (Z1) light signals of approximately the same magnitude are present from both measuring devices at the light receiver (20).

7. A method as claimed in one of the preceding claims, **characterised in that** in order to check whether the person (P) or the other object (30) is approaching the object (10) in the predetermined direction (13), a check is made as to whether the signal pattern of the signal entering the light receiver (20) or the signals emanating from the two opto-electronic measuring devices (01, 02) has or have a zero point.

8. A method as claimed in one of the preceding claims, **characterised in that** the extent of the nearer zone (Z2) and of the remote zone (Z1) is shortened in the event of a small distance of the object (10) from other objects (30).

9. A method as claimed in one of the preceding claims, **characterised by** the arrangement of a respective two light emitters (15, 16) and a respective light receiver (20) in the tail lamps (21) of a motor vehicle, wherein the light emitters and light receivers are preferably provided to determine the degree of fouling of the tail lamps whilst driving and wherein the light intensity of the tail lamp or the bulbs received therein for rear lighting, brake lighting, indicators or the like is controlled in dependence on the degree of fouling.

10. A method as claimed in one of the preceding claims, **characterised in that** the control command is used to open or lock the boot lid (22) of a motor vehicle.

11. A method as claimed in one of claims 4 to 10, **characterised in that** before a person (P) or another object (30) adopts the predetermined position in the remote zone (Z1) this zone is monitored for the approach of a person (P) or another object (30) by a plurality of light emitters (15, 16) intermittently together emitting light and, in the event of a corresponding reflection of a body into the light receiver (20) the detection lobes (D1, D2) are rendered operative.

12. A method as claimed in one of the preceding claims, **characterised in that** it is monitored whether the person (P) or the other object (30) leaves the nearer zone (Z2) and thereupon a further control command is produced.

13. A method as claimed in one of the preceding claims, **characterised in that** when the vehicle is operated the zone (Z1, Z2) is monitored as to whether a subsequent other object (30), particularly a vehicle, is approaching and that as soon as the other object reaches the zone (Z1) the light intensity of the brake light is controlled, preferably controlled down, wherein the zone is preferably monitored to check whether the other object is approaching in a straight line and/or wherein preferably the light intensity is continuously dimmed down to a minimum value in dependence on the distance or is dimmed up when the distance increases.

14. Apparatus for the detection of the approach of a person (P) or another object to an object (10), particularly to a motor vehicle, including:
- a control device (C) arranged in the approached object, which is connected to a transmitting and receiving unit (11),
- means for producing a control command for controlling a function of the approached object (10) when an approach occurs,
- means for monitoring the proximity of the approached object by zones by means of at least one opto-electronic measuring device (01, 02), wherein at least two zones are provided, of which one zone (Z1) remote from the approached object (10) is provided for identification of the approach and one closer zone (Z2), in which the control command is produced,
- an analysis unit for determining whether a person (P) or another object (30) is moving, starting from a position in the remote zone (Z2), in a predetermined direction (13) into the nearer zone (Z2),
- **characterised in that** the opto-electronic measuring device (01, 02) includes at least two light emitters (15, 16) and at least one light receiver (20), wherein associated with the light emitters (15, 16) are detection lobes, which define the zone (Z1) remote from the approached object (10) and the nearer zone (Z2),

15. Apparatus claimed in claim 14, **characterised in that** the apparatus is a security apparatus against unauthorised access to an object or against unauthorised use of the object (10), particularly of the motor vehicle, including:
- a portable code transmitter (12) for developing a dialogue with the transmitting and receiving unit (11) for authorisation checking on approach of the code transmitter to the object (10), and
- means for producing the control command for controlling the function of the object (10) in the event of a positive result of the authorisation check.

16. Apparatus claimed in claim 14 or 15, **characterised in that** two opto-electronic measuring devices (01, 02) are provided, whose detection lobes (D1, D2) are formed by the light emitters (15, 16) and are associated with the zone (Z1, Z2), overlap with one another, whereby preferably the measuring device (01, 02) provided on the object includes at least two light emitters (15, 16) and at least one light receiver (20), whereby preferably in each case the one light emitter reaches with its detection lobe (D1) into the outer zone (Z1) whilst the other light emitter (16) covers the inner zone (Z2) with its detection lobe (D2).

17. Apparatus as claimed in one of claims 14 to 16, **characterised in that** means are provided for determining a preferably simultaneous zero point of the signals entering the light receiver (10) from the two opto-electronic measuring devices (01, 02) on approach of a person (P) or another object (30) to the object (10) in the predetermined direction (13).

18. Apparatus claimed in one of claims 14 to 17, **characterised in that** the light emitters (15, 16) and the light receiver (20) are respectively arranged in the tail lamps of a motor vehicle, whereby preferably means are provided for controlling the light intensity of the brake light when a subsequent other object, particularly a vehicle, approaches the zone (Z1, Z2),

19. Apparatus claimed in one of the preceding claims 14 to 18, **characterised in that** the function is the opening or closing of a boot lid (22).

## Revendications

1. Procédé pour détecter une approche d'une personne (P) ou d'un autre objet (30) vers un objet (10), et plus particulièrement vers un véhicule automobile, avec :
- un dispositif de commande (C) situé du côté de l'objet dans l'objet approché, lequel dispositif est pourvu d'une unité émettrice et réceptrice (11), pour générer un ordre de commande pour commander une fonction de l'objet approché (10) en cas d'approche,
- la zone à proximité de l'objet approché (10) étant répartie en au moins deux zones (Z1, Z2), l'approche étant reconnue dans une zone (Z1) éloignée de l'objet approché (10) et l'ordre de commande étant généré dans une zone (Z2) qui est par contre plus proche de l'objet approché,
- les zones (Z1, Z2) étant surveillées de manière opto-électronique quant à l'accès d'une personne (P) ou d'un autre objet (30) à la zone plus proche (Z2) à partir d'une position dans la zone éloignée (Z1) dans une direction prédéterminée (13),
**caractérisé en ce que**
les zones sont surveillées au moyen d'au moins un dispositif de mesure opto-électronique (01, 02) avec au moins deux émetteurs de lumière (15, 16) et au moins un récepteur de lumière (20), les émetteurs de lumière (15, 16) émettant des lobes de détection.

2. Procédé selon la revendication 1, **caractérisé en ce que** la détection d'approche est effectuée pour signaler une autorisation d'une personne (P) à verrouiller ou à déverrouiller sans contact ou à utiliser l'objet (10), avec :
- un générateur de code portable (12) qui effectue, en fonction de la position, avec l'unité émettrice et réceptrice (11), un dialogue pour contrôler l'autorisation à l'approche du générateur de code vers l'objet (10),
- l'ordre de commande pour commander la fonction de l'objet (10) étant généré en cas de résultat positif du contrôle de l'autorisation,
- l'unité émettrice et réceptrice (11), de préférence, effectuant en outre le contrôle de l'autorisation avec le générateur de code, de préférence en activant au moins une antenne (14), lorsque la personne (P) ou l'autre objet (30) accède à la zone intérieur (Z2) dans la direction prédéterminée (13).

3. Procédé selon la revendication 1 ou 2, **caractérisé en ce que** l'objet (10) donne un signal lorsque la personne (P) ou l'autre objet (30) se trouve dans la position prédéterminée.

4. Procédé selon l'une des revendications précédentes, **caractérisé en ce que** plusieurs lobes de détection (D1, D2) sont réalisés, pour une détection de la personne (P) ou de l'autre objet (30), en tant que corps réflecteurs qui sont associés aux zones respectives (Z1, Z2).

5. Procédé selon la revendication 4, **caractérisé en ce que** les signaux lumineux des au moins deux lobes de détection (D1, D2) qui entrent au niveau du récepteur de lumière (20) suite à la réflexion sont détectés séparément pour chaque zone (Z1, Z2) et sont comparés entre eux dans la zone, au moins deux dispositifs de mesure opto-électroniques (01, 02) situés à distance l'un de l'autre et comportant chacun au moins deux émetteurs de lumière (15, 16) et de préférence chacun un récepteur de lumière (20) étant prévus de préférence au niveau de l'objet (10), respectivement l'un émetteur de lumière (15) allant avec son lobe de détection (D1) jusque dans la zone éloignée (Z1) tandis que l'autre émetteur de lumière (16) recouvre, avec son lobe de détection (D2), la zone plus proche (Z2).

6. Procédé selon la revendication 4 ou 5, **caractérisé en ce que** la position dans la zone éloignée (Z1) est prédéterminée par le fait que, si la personne (P) ou l'autre objet (30) sont positionnés centralement entre les dispositifs de mesure opto-électroniques (01, 02), on a, dans la zone éloignée (Z1), des signaux lumineux de taille approximativement identique des deux dispositifs de mesure au niveau du récepteur de lumière (20).

7. Procédé selon l'une des revendications précédentes, **caractérisé en ce qu'**il est contrôlé, pour constater si la personne (P) ou l'autre objet (30) s'approchent de l'objet (10) dans la direction prédéterminée, si le tracé du signal entrant au niveau du récepteur de lumière (20) resp. des signaux provenant des deux dispositifs de mesure opto-électroniques (01, 02) présente un passage par zéro.

8. Procédé selon l'une des revendications précédentes, **caractérisé en ce que** l'étendue de la zone plus proche (Z2) et de la zone éloignée (Z1) est raccourcie lorsque la distance de l'objet (10) par rapport à d'autres objets (30) est faible.

9. Procédé selon l'une des revendications précédentes, **caractérisé par** l'agencement de respectivement deux émetteurs de lumière (15, 16) et de respectivement un récepteur de lumière (20) dans les feux arrière (21) d'un véhicule automobile, les émetteurs de lumière et les récepteurs de lumière étant préférentiellement prévus pour déterminer le degré de salissure des feux arrière en particulier pendant le déplacement, et l'intensité lumineuse du feu arrière resp. des lampes qui y sont logées pour le feu de position arrière, le feu de freinage, les feux clignotants ou autres similaires étant réglée en fonction du degré de salissure.

10. Procédé selon l'une des revendications précédentes, **caractérisé en ce que** l'ordre de commande sert à ouvrir ou à verrouiller le capot arrière (22) d'un véhicule automobile.

11. Procédé selon l'une des revendications 4 à 10, **caractérisé en ce que** avant qu'une personne (P) ou un autre objet (30) n'occupe la position prédéterminée dans la zone éloignée (Z1), cette zone est surveillée quant à l'approche d'une personne (P) ou d'un autre objet (30) vers elle, **en ce que** plusieurs émetteurs de lumière (15, 16) émettent de la lumière en commun par intermittence et **en ce que**, étant donné une réflexion correspondante d'un corps vers le récepteur de lumière (20), les lobes de détection (D1, D2) sont activés.

12. Procédé selon l'une des revendications précédentes, **caractérisé en ce qu'**il est surveillé si la personne (P) ou l'autre objet (30) quitte la zone plus proche (Z2) et si un autre ordre de commande est ensuite généré.

13. Procédé selon l'une des revendications précédentes, **caractérisé en ce que**, lors du fonctionnement du véhicule, la zone (Z1, Z2) est surveillée pour établir si un autre objet suivant (30), et plus particulièrement un véhicule, s'approche, et **en ce que**, dès que l'autre objet atteint la zone (Z1), l'intensité lumineuse du feu de freinage subit un réglage, de préférence à la baisse, la zone étant préférentiellement surveillée quant à l'approche de l'autre objet en ligne droite et/ou l'intensité lumineuse, de préférence, subissant une variation à la baisse en continu jusqu'à une valeur minimale en fonction de la distance resp. subissant une variation à la hausse lorsque la distance augmente.

14. Dispositif pour détecter l'approche d'une personne (P) ou d'un autre objet vers un objet (10), et plus particulièrement un véhicule automobile, avec:
- un dispositif de commande (C) situé du côté de l'objet dans l'objet approché, lequel dispositif est relié à une unité émettrice et réceptrice (11) ;
- des moyens pour générer un ordre de commande pour commander une fonction de l'objet approché (10) en cas d'approche ;
- des moyens pour surveiller zone par zone la proximité de l'objet approché au moyen d'au moins un dispositif de mesure opto-électronique (01, 02), au moins deux zones étant prévues, à savoir une zone (Z1) éloignée de l'objet approché (10) et prévue pour reconnaître l'approche et une zone plus proche (Z2) dans laquelle est généré l'ordre de commande ;
- une unité d'évaluation pour déterminer si une personne (P) ou un autre objet (30) accède à la zone plus proche (Z2) à partir d'une position dans la zone éloignée (Z2) dans une direction prédéterminée (13),
**caractérisé en ce que** le dispositif de mesure opto-électronique (01, 02) comprend au moins deux émetteurs de lumière (15, 16) et au moins un récepteur de lumière (20), des lobes de détection qui définissent la zone (Z1) éloignée de l'objet approché (10) et la zone plus proche (Z2) étant associés aux émetteurs de lumière (15, 16).

15. Dispositif selon la revendication 14, **caractérisé en ce que** le dispositif est un dispositif de sécurité contre l'accès non autorisé à un objet ou contre l'utilisation non autorisée de l'objet (10), et plus particulièrement du véhicule automobile, avec :
- un générateur de code portable (12) pour établir un dialogue avec l'unité émettrice et réceptrice (11) pour contrôler l'autorisation à l'approche du générateur de code vers l'objet (10) et
- des moyens pour générer l'ordre de commande pour commander la fonction de l'objet (10) en cas de résultat positif du contrôle de l'autorisation.

16. Dispositif selon la revendication 14 ou 15, **caractérisé en ce que** sont prévus deux dispositifs de mesure opto-électroniques (01, 02) dont les lobes de détection (D1, D2) formés par les émetteurs de lumière (15, 16) et associés aux zones (Z1, Z2) se chevauchent, de préférence le dispositif de mesure (O1, 02) prévu au niveau de l'objet comprenant au moins deux émetteurs de lumière (15, 16) et de préférence un récepteur de lumière (20), de préférence respectivement l'un émetteur de lumière (15) allant avec son lobe de détection (D1) jusque dans la zone extérieure (Z1) tandis que l'autre émetteur de lumière (16) recouvre, avec son lobe de détection (D2), la zone intérieure (Z2).

17. Dispositif selon l'une des revendications 14 à 16, **caractérisé en ce que** sont prévus des moyens pour déterminer un passage par zéro, préférentiellement simultané, des signaux entrant au niveau du récepteur de lumière (20) à partir des deux dispositifs de mesure opto-électroniques (01, 02) lorsqu'une personne (P) ou un autre objet (30) s'approche de l'objet (10) dans la direction prédéterminée (13).

18. Dispositif selon l'une des revendications 14 à 17, **caractérisé en ce que** les émetteurs de lumière (15, 16) et les récepteurs de lumière (20) sont respectivement situés dans les feux arrière (21) d'un véhicule automobile, des moyens de réglage de l'intensité lumineuse du feu de freinage étant préférentiellement prévus lorsqu'un autre objet suivant (30), et plus particulièrement un véhicule, s'approche de la zone (Z1, Z2).

19. Dispositif selon l'une des revendications 14 à 18, **caractérisé en ce que** la fonction est l'ouverture ou la fermeture d'un capot arrière (22).
